# EUROPÄISCHE PATENTSCHRIFT

(11) **EP 1 989 494 B1**
(45) Veröffentlichungstag und Bekanntmachung des Hinweises auf die Patenterteilung: **13.02.2013**
(21) Anmeldenummer: 07702441.2
(22) Anmeldetag: 13.02.2007
(51) Int. Cl.: F24J 2/38, F24J 2/54, H01L 31/042, F24J 2/40

(54) **NACHFÜHRBARES GESTELL FÜR PHOTOVOLTAIKMODULE**
TRACKING SUPPORT FOR PHOTOVOLTAIC MODULES
BÂTI ORIENTABLE POUR MODULES PHOTOVOLTAÏQUES

(30) Priorität: 28.02.2006 DE 102006010162
(43) Veröffentlichungstag der Anmeldung: 12.11.2008
(73) Patentinhaber: Mounting Systems GmbH, 15834 Rangsdorf (DE)
(72) Erfinder: SILVAN, Andreas, 15834 Rangsdorf (DE)
(74) Vertreter: Kietzmann, Manfred
(86) Internationale Anmeldenummer: PCT/DE2007/000281
(87) Internationale Veröffentlichungsnummer: WO 2007/098734

(56) Entgegenhaltungen:
- DE-A1- 4 317 279
- FR-A1- 2 361 600
- JP-A- 57 142 447
- US-A- 4 165 734
- US-A- 4 187 123
- US-A- 4 314 546
- US-A- 4 365 617
- US-A- 5 172 625
- US-A- 5 228 924
- US-A- 6 058 930
- US-A1- 2003 062 037

## Beschreibung

Die Erfindung betrifft ein nachgeführtes Gestellsystem für Photovoltaikmodule wie sie insbesondere in Sonnenenergieparks genutzt werden.

Derartige Anlagen sind bekannt. So wird in der DE 199 16 514 A1 ein nachführbarer Sonnenkollektor beschrieben mit einem auf eine Absorbereinheit richtbaren Reflektormittel. Hierbei ist vorgesehen, dass die Absorbereinheit aus einer Vielzahl zumindest im wesentlichen paralleler, radial ausgedehnter Fluidleitung besteht, die so in das Reflektormittel definierenden Spiegelrinnen verlaufen, dass deren Brennlinien in und/oder auf die jeweiligen Fluidleitungen fallen, die Spiegelrinne allgemein um die Fluidleitungen schwenkbar ist und sich quer zur Vielzahl Spiegelrinnen ein Stellelement erstreckt, um Spiegelrinnen gemeinsam allgemein um die jeweiligen Fluidleitungen zu schwenken.

Das Verstellen der Spiegelrinnen kann sonnenstandsabhängig und/oder zeitfunktionsgesteuert sein. Es erfolgt für alle Spiegelrinnen gleichzeitig durch eine Antriebseinheit bestehend aus einem Schrittmotor und einer durchgehenden Schubstange, die vom Schrittmotor angetrieben wird und über ein Anschlussgelenk und einen Schwenkarm mit der Achse der jeweiligen Spiegelrinne gekoppelt ist.

Nachteilig bei dieser Lösung ist, dass nur ein Verstellen gegenüber einer Ebene möglich ist. Weiterhin wirken Lasten auf die Kollektoren direkt auf den Schrittmotor.

Eine gegenüber zwei Ebenen verstellbare nachführbare Solarmodulanlage ist aus der ES 10 51 388 U bekannt. Dabei kommt ein rechteckiges Grundgestell mit 3 Längsstreben zum Einsatz, jeweils eine Strebe außen und eine mittig verlaufend. Die mittige Längstrebe ist beidseitig drehbar auf jeweils einem zweibeinigen Stützfuß gelagert. So wird die Schwenkbewegung gegenüber einer Ebene realisiert. Das Grundgestell ist dabei als reiner Unterbau konzipiert und wird von den montierten Solarmodulen total verdeckt.

Das Grundgestell weist wiederum mehrere beabstandet angeordnete Querstreben auf, die an den Enden senkrecht zur Grundgestellebene gekröpft ausgebildet sind und so die Lagerpunkte für die Schwenkachse des jeweiligen Solarmodulrahmens oder Solarmodulrahmenträgers bilden.

Von der Höhe der Kröpfung und der Breite der Solarmodule/Solarmodulrahmen wird damit die Größe des Schwenkwinkels bestimmt.

Ein weiteres nachführbares Gestellsystem für Solarmodule ist aus der US 4 187 123 A bekannt. Es besteht aus zwischen zwei Gestellfüßen drehbar gelagert angeordneten Modulträgerrahmen, wobei der Modulträgerrahmen mit einem an einem Gestellfuß angeordneten Hydraulikzylinder zur Durchführung von Schwenkbewegungen gekoppelt ist. Der Modulträgerrahmen weist beabstandet angeordnete Lager für die senkrecht zur Schwenkachse des Modulträgerrahmens verlaufenden Drehachsen der Modulträger auf.

Die Drehachsen der Modulträger verfügen jeweils über einen Schwenkhebel, der über ein Gelenk mit einer Schubstange verbunden ist, wobei eine Schubstange durch einen Hydraulikzylinder, angeordnet am Modulträgerrahmen verschiebbar ist. Die Bewegung der Hydraulikzylinder erfolgt sonnenstandsabhängig.

Bei hohen Windlasten, die durch Sensoren erfassbar sind, erfolgt eine Fixierung der Module mittels Feststelleinrichtungen.

Des weiteren ist es aus der CA 2 435 992 A1 bekannt, Sonnenlicht gezielt mittels Reflektoren in Gebäude zu leiten. Die Reflektoren werden dabei der Sonnenstrahlung nachgeführt, wozu hier eine besondere Schaltung beschrieben wird.

Aufgabe der Erfindung ist es, ein nachführbares Gestellsystem für für Photovoltaikmodule vorzuschlagen, das zuverlässig, energieoptimiert und wartungsarm arbeitet.

Gelöst wird diese Aufgabe mit den Vorrichtungsmerkmalen des Anspruches 1, vorteilhafte Ausgestaltung sind Gegenstand der Unteransprüche. Die Ansprüche 7 bis 9 betreffen ein Verfahren zur Steverung eines nachführbaren Gestellsystems nach Anspruch 1

Das nachführbare Gestellsystem für Photovoltaikmodule, besteht aus zwischen zwei Gestellfüßen drehbar gelagert angeordneten Modulträgerrahmen, wobei der Modulträgerrahmen erfindungsgemäß über eine Schwenkstange mit einem an einem Gestellfuß angeordneten Lineargleitlager und einem Elektrozylinder zur Durchführung von Schwenkbewegungen gekoppelt ist.

Der Modulträgerrahmen weist beabstandet angeordnete Lager für die senkrecht zur Schwenkachse des Modulträgerrahmens verlaufenden Drehachsen der Modulträger auf, wobei die Modulträgeraußenmaße und die Modulaußenmaße so ausgelegt sind, dass sie durch die vom Modulträgerrahmen aufgespannte Ebene schwenkbar sind.
Die Drehachsen der Modulträger verfügen jeweils über einen Schwenkhebel, der über ein Gelenk mit einer geteilt ausgebildeten Schubstange verbunden ist, wobei das Gelenk jeweils benachbarte Schubstangenabschnitte verbindet, und eine Schubstange durch einen Elektrozylinder, angeordnet am Modulträgerrahmen, verschiebbar ist. Die Bewegung der Elektrozylinder erfolgt sonnenstandsabhängig oder zeitfunktionsgesteuert.

Das so ausgebildete Gestellsystem weist eine hohe innere Stabilität auf, kann große Verstellwinkel realisieren und ist wartungsarm zu betreiben.

Bevorzugt werden die Gestellfüße, der Modulträgerrahmen, der Modulträger sowie die Schubstangenabschnitte aus Aluminium oder einer Aluminiumlegierung hergestellt. Das macht das Gestellsystem vergleichsweise leicht und ebenfalls wartungsfrei.

Ein weiterer Vorteil besteht darin, dass das beschriebene Gestell erweiterbar ist. Dazu sieht eine vorteilhafte Ausgestaltung vor, dass mindestens zwei auf jeweils zwei Gestellfüßen gelagerte Modulträgerrahmen nebeneinander angeordnet und miteinander starr zu einer Einheit verbunden sind, wobei nur ein Modulträgerrahmen über ein die Schwenkbewegung erzeugendes Getriebe aus Schwenkstange, Lineargleitlager und Elektrozylinder verfügt. Bevorzugt besteht eine Einheit aus drei miteinander verbundenen Modulträgerrahmen, von denen einer über ein die Schwenkbewegung bewirkendes Getriebe verfügt.

Dabei sollten die geteilt ausgebildeten Schubstangen zur Bewegung der Modulträger der jeweiligen Modulträgerrahmen ebenfalls miteinander gekoppelt werden, so dass ein Elektrozylinder die Drehbewegung aller Modulträger bewirkt.

Neben dem wartungsfreien Getriebe für den Modulträgerrahmen, das eine Schwenkstange mit einem an einem Gestellfuß angeordneten Lineargleitlager und einen Elektrozylinder umfasst, sind trockenlaufende Kunststofflager als Lager für die Modulträgerdrehachsen am Modulträgerrahmen vorgesehen.

Ebenso sind die Gelenke zwischen den Schubstangenabschnitten bevorzugt aus Kunststoff mit Kohlefasern hergestellt.

In einer bevorzugten Ausführung weist das Gelenk jedes Schubstangenabschnittes ein Auge mit Zapfen auf, wobei der Zapfen formschlüssig in den rohrförmigen Schubstangenabschnitt einbringbar ist, vorzugsweise in Form einer Schraubverbindung zwischen Zapfen und Innenrohr. Neben konstruktiven Vorteilen gegenüber einer durchgehenden Schubstange ist eine derartige Ausbildung auch transportfreundlich, denn das zerlegte Gestell muss ja zum Aufstellort transportiert werden.

Zu Steuerungs- und Überwachungszwecken ist erfindungsgemäß vorgesehen, dass jeder Modulträgerrahmen oder jede Einheit aus Modulträgerrahmen auf einem Modulträger einen Gravitationssensor aufweist, der die Stellung des Modulträgerrahmens und/oder Modulträgers misst und die Messsignale einer Rechen- und Steuereinheit zuleitet.

Eine derartige Ausrüstung des Gestellsystems hat den Vorteil, dass die Elektrozylinder keiner Positionserfassung bedürfen. Auch das garantiert hochgradig die Wartungsfreiheit des Systems.

Darüber hinaus lassen sich die Daten der Gravitationssensoren rechentechnisch mit Umweltdaten kombinieren, um zu Steuerdaten zur Ansteuerung der Elektrozylinder zu gelangen, wobei diese im einfachsten Fall aus "Strom an" und "Strom aus" bestehen können.

Aufbauend auf dieser Form der Ausstattung sieht ein vorteilhaftes Verfahren zur Steuerung des nachführbaren Gestellsystems vor, dass die Bewegung der Elektrozylinder mittels eines astronomischen Nachführalgorithmuses gesteuert ist, und bei mittels Sensoren festgestellten Umwelteinflüssen, die zur Überschreitung von Lastaufnahmeobergrenzen des Gestells führen, die Zeitfunktionssteuerung ersetzt wird durch eine Ansteuerung der Elektrozylinder in eine vorgegebene lastminimierte Position für das Gestell.

Dies kann maschinentechnisch erfolgen oder auch per Hand veranlasst werden.

Weiterhin sieht eine vorteilhafte Ausgestaltung des Verfahrens vor, dass die Zeitfunktionssteuerung in den Phasen der Ansteuerung und des Beibehaltens der lastminimierten Position intern weiterläuft, so dass bei der Entaktivierung der lastminimierenden Position die der Zeit entsprechende Position durch Energiezufuhr zu den Elektrozylindern angesteuert wird.

Unter Umwelteinflüssen, die zur Überschreitung von Lastaufnahmeobergrenzen des Gestells führen können, werden insbesondere Windkräfte aber auch Schneelasten gesehen.

Eine Position, die geringste Windangriffsflächen bietet, wird danach als lastminimierende Position bezeichnet.

Detailansichten des nachführbaren Gestellsystems werden in den Zeichnungen dargestellt. Es zeigen:
- Fig. 1: Gestellsystem mit zwei Modulträgerrahmen und
- Fig. 2: Elektrozylinderanordnung an einem Gestellfuß.

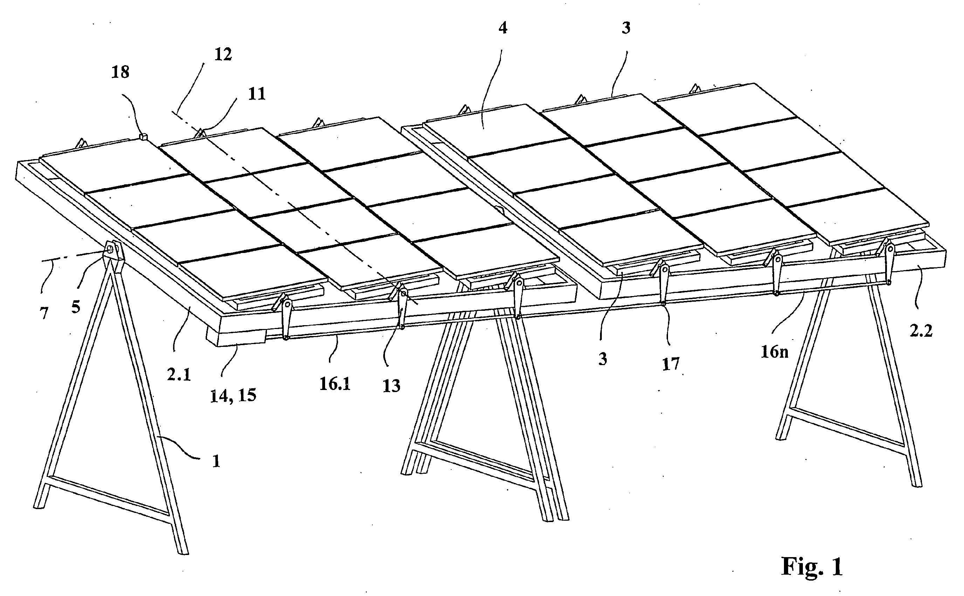

**Fig.1** zeigt das Gestellsystem mit zwei Modulträgerrahmen 2. Jeder Modulträgerrahmen 2 ist oben zwischen zwei Gestellfüßen 1 drehbar um die Drehachse 6 in den Lagern 5 gelagert. Die beiden Modulrahmen 2 sind hier miteinander unter Einhaltung eines Abstandes starr und lösbar verbunden. Die Schwenkbewegung wird durch einen Elektrozylinder 10 bewirkt und ist bei dieser Anordnung durch das Gestellsystem in keiner Weise behindert.

Der Modulträgerrahmen 2 weist beabstandet angeordnete Lager 11 für die senkrecht zur Schwenkachse 7 des Modulträgerrahmens 2 verlaufenden Drehachsen 12 der Modulträger 3 auf, wobei die Modulträgeraußenmaße und die Außenmaße der Module 4 so ausgelegt sind, dass sie durch die vom Modulträgerrahmen 2 aufgespannte Ebene schwenkbar sind.
Auch durch diese Anordnung ist gewährleistet, dass die Schwenkbewegung nicht durch Gestellteile begrenzt wird, die nicht zum Antrieb gehören. Für Wartungsfreiheit sorgen Ausführungen der Lager 11 als trockenlaufende Kunststofflager.

Die Drehachsen 12 der Modulträger 3 verfügen jeweils über einen Schwenkhebel 13, der über ein Gelenk 17 mit einer geteilt ausgebildeten Schubstange 16 verbunden ist, wobei das Gelenk 17 jeweils benachbarte Schubstangenabschnitte verbindet.
Eine Schubstange 16.1 ist durch einen Elektrozylinder 15, angeordnet am Modulträgerrahmen 2,verschiebbar, wobei die Bewegung des Elektrozylinders 15 zeitfunktionsgesteuert ist.
Die Einheit aus Modulträgerrahmen 2.1, 2.2 weist auf einem Modulträger 3 einen Gravitationssensor 18 auf, der die Stellung des Modulträgerrahmens 2 und der Modulträger 3 misst und die Messsignale einer Rechen- und Steuereinheit zuleitet. Damit ist die exakte Position der Module 4 bekannt, ohne dass Einstellungen der Elektrozylinder 10, 15 festgestellt werden müssen. Auf Messelektronik an den Elektrozylindern 10, 15 kann so verzichtet werden. Auch das senkt die Störanfälligkeit und damit den Wartungsaufwand. Darüber hinaus ist es möglich, die Daten des oder der Gravitationssensoren 18 zusammenzuführen mit Daten von mittels Sensoren festgestellten Umwelteinflüssen, die zur Überschreitung von Lastaufnahmeobergrenzen des Gestells führen oder führen könnten, um auf dieser Grundlage dann die Zeitfunktionssteuerung zu ersetzen durch eine Ansteuerung der Elektrozylinder 10,15 in eine vorgegebene lastminimierte Position für das Gestell. Natürlich ist eine derartige Verstellung auch aus anderen Gründen möglich.

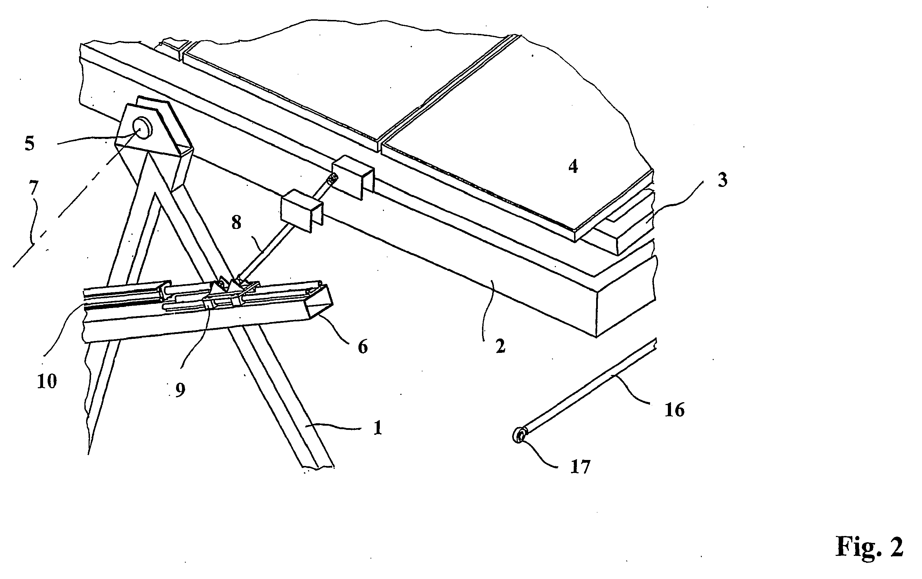

**Fig. 2** zeigt in einer Teilansicht einen Gestellfuß 1 mit dem im Lager 5 drehbar gelagert angeordneten Modulträgerrahmen 2, wobei der Modulträgerrahmen 2 über eine Schwenkstange 8 mit einem an einem Gestellfuß 1 auf einer Lagerschiene 6 angeordneten Lineargleitlager 9 und einem Elektrozylinder 10 zur Durchführung von Schwenkbewegungen gekoppelt ist. Diese Getriebeanordnung hat den Vorteil, dass die Lastwirkung des Modulträgerrahmens 2 mit allen Aufbauten nicht direkt und nicht voll auf den Elektrozylinder 10 wirkt, denn das Lineargleitlager 9 kompensiert einen Teil der Kräfte. Das ist besonders vorteilhaft bei der Beherrschung größerer Windlasten.

Wie bereits gezeigt verfügen die Drehachsen 12 der Modulträger 3 jeweils über einen Schwenkhebel 13, der über ein hier teilweise gezeigtes Gelenk 17 mit einer geteilt ausgebildeten Schubstange 16 verbunden ist, wobei das Gelenk 17 jeweils benachbarte Schubstangenabschnitte verbindet.

Die Gelenke 17 zwischen den Schubstangenabschnitten 16.1 - 16.2, 16.2 - 16.3, usw. bestehen aus Kunststoff mit Kohlefasern. Dabei weist das Gelenk 17 jedes Schubstangenabschnittes 16.1 - 16.n ein Auge mit Zapfen auf, wobei der Zapfen formschlüssig in den rohrförmigen Schubstangenabschnitt 16.1 - 16.n eingebracht ist, vorzugsweise in Form einer Schraubverbindung.

### Bezugszeichenliste

- 1: Gestellfuß
- 2: Modulträgerrahmen
- 3: Modulträger
- 4: Modul
- 5: Lager Modulträgerrahmen
- 6: Lagerschiene
- 7: Schwenkachse für Modulträgerrahmen
- 8: Schwenkstange
- 9: Lineargleitlager Modulträgerrahmen
- 10: Elektrozylinder zum Schwenken des Modulrahmens
- 11: Lager Modulträger
- 12: Drehachse Modulträger
- 13: Schwenkhebel
- 14: Lineargleitlager Modulträger
- 15: Elektrozylinder Modulträger
- 16: Schubstange geteilt (16.1 -16.n)
- 17: Gelenk zwischen Schubstangenabschnitten
- 18: Gravitationssensor

## Patentansprüche

1. Nachführbares Gestellsystem für Photovoltaikmodule bestehend aus zwischen zwei Gestellfüßen (1) drehbar gelagert angeordneten Modulträgerrahmen (2), wobei der Modulträgerrahmen (2) mit einem Antrieb am Gestellfuß (1) zur Durchführung von Schwenkbewegungen gekoppelt ist,
der Modulträgerrahmen (2) beabstandet angeordnete Lager (11) für die senkrecht zur Schwenkachse (7) des Modulträgerrahmens (2) verlaufenden Drehachsen (12) der Modulträger (3) aufweist, wobei die Modulträgeraußenmaße und die Modulaußenmaße so ausgelegt sind, dass sie durch die vom Modulträgerrahmen (2) aufgespannte Ebene schwenkbar sind,
die Drehachsen (12) der Modulträger (3) jeweils über einen Schwenkhebel (13) verfügen, der über ein Gelenk (17) mit einer geteilt ausgebildeten Schubstange (16) verbunden ist, wobei das Gelenk (17) jeweils benachbarte Schubstangenabschnitte verbindet,
die Schubstange (16) durch einen Antrieb verschiebbar ist und beide Antriebe sonnenstandsabhängig oder zeitfunktionsgesteuert sind,
die Ansteuerung der Antriebe über eine Rechen- Und Steuereinheit erfolgt
**dadurch gekennzeichnet, dass**
zur Durchführung von Schwenkbewegungen des Modulträgerrahmens (2) der am Gestellfuß (1) angeordnete Antrieb aus einem Elektrozylinder (10) mit Lineargleitlager (9) am Gestellfuß (1) und einer Schwenkstange (8) zwischen Lineargleitlager (9) und Modulträgerrahmen (2) besteht, der Antrieb für die Schubstange (16) einen Elektrozylinder (15) umfasst, der am Modulträgerrahmen (2) angeordnet ist und
auf einem Modulträger (3) ein Gravitationssensor (18) angeordnet ist, der die Stellung des Modulträgerrahmens (2) und/oder des Modulträgers (3) misst und die Messsignale der Rechen- und Steuereinheit zur Ansteuerung der Antriebe zuleitet.

2. Nachführbares Gestellsystem nach Anspruch 1, **dadurch gekennzeichnet, dass**
die Rechen- und Steuereinheit mit weiteren Messgebern zur Ermittlung von Umweltdaten gekoppelt ist.

3. Nachführbares Gestellsystem nach Anspruch 1 oder 2, **dadurch gekennzeichnet, dass**
mindestens zwei auf jeweils zwei Gestellfüßen (1) gelagerte Modulträgerrahmen (2.1, 2.2) nebeneinander angeordnet und miteinander starr zu einer Einheit verbunden sind, wobei nur ein Modulträgerrahmen (2.1) über ein die Schwenkbewegung erzeugenden Antrieb aus Schwenkstange (8), Lineargleitlager (9) und Elektrozylinder (10) verfügt.

4. Nachführbares Gestellsystem nach Anspruch 3, **dadurch gekennzeichnet, dass**
eine Einheit aus drei miteinander verbundenen Modulträgerrahmen (2.1, 2.2, 2.3) besteht, von denen einer über ein die Schwenkbewegung erzeugenden Antrieb aus Schwenkstange (8), Lineargleitlager (9) und Elektrozylinder (10) verfügt.

5. Nachführbares Gestellsystem nach einem der Ansprüche 1 bis 4, **dadurch gekennzeichnet, dass**
die Lager (11) der Modulträgerdrehachsen (12) am Modulträgerrahmen (2) trockenlaufende Kunststofflager sind.

6. Nachführbares Gestellsystem nach einem der Ansprüche 1 bis 5, **dadurch gekennzeichnet, dass**
die Gelenke (17) zwischen den Schubstangenabschnitten (16.1 -16.2, 16.2 - 16.3, usw.) aus Kunststoff mit Kohlefasern bestehen.

7. Verfahren zur Steuerung eines nachführbaren Gestellsystems nach Anspruch 1
**dadurch gekennzeichnet, dass** die Bewegung der Elektrozylinder (10,15) mittels einer Zeitfunktionssteuerung gesteuert ist, dass der Gravitationssensor (18) die Stellung des Modulträgerrahmens und/oder des Modulträgers misst und die Messsignale der Rechen- und Steuereinheit zur Ansteuerung der Antriebe zuleitet, und dass
bei mittels Sensoren festgestellten Umwelteinflüssen, die zur Überschreitung von Lastaufnahmeobergrenzen des Gestells führen, die Zeitfunktionssteuerung ersetzt wird durch eine Ansteuerung der Elektrozylinder (10,15) in eine vorgegebene lastminimierte Position für das Gestell.

8. Verfahren nach Anspruch 7, **dadurch gekennzeichnet, dass**
die Zeitfunktionssteuerung in den Phasen der Ansteuerung und des Beibehaltens der lastminimierten Position intern weiterläuft, so dass bei der Entaktivierung der lastminimierenden Position die der Zeit entsprechende Position durch Energiezufuhr zu den Elektrozylindern (10, 15) angesteuert wird.

9. Verfahren nach Anspruch 7 oder 8, **dadurch gekennzeichnet, dass**
die Zeitfunktionssteuerung unter Verwendung eines astronomischen Nachführalgorithmusses erfolgt.

## Claims

1. A tracking rack system for photovoltaic modules consisting of module support frames (2) arranged pivoted between two rack bases (1), wherein the module support frame (2) is coupled with a drive on the rack base (1) for performing pivoting movements;
the module support frame (2) includes bearings (11) arranged spaced apart from each other for the axes of rotation (12) of the module supports (3) which are perpendicular to the pivoting axis (7) of the module support frame (2), wherein the outside dimensions of the module support and the outside dimensions of the module are designed such that they can be pivoted through the plane spanned by the module support frame (2);
the axes of rotation (12) of the module supports (3) each have a pivoting lever (13) which is connected to a push rod having a split design (16) by way of a joint (17), wherein the joint (17) connects adjacent push rod sections;
the push rod (16) is movable by a drive and both drives are dependent on the position of the sun or controlled as a function of time; the control of the drives is effected by way of a computing and control unit;
**characterized in that**
the drive arranged on the rack base (1) consists of an electrical cylinder (10) with a linear slide bearing (9) on the rack base (1) and a pivoting rod (8) between the linear slide bearing (9) and the module support frame (2) for performing pivoting movements of the module support frame (2); the drive for the push rod (16) comprises an electrical cylinder (15) which is arranged on the module support frame (2); and
a gravity sensor (18) which measures the position of the module support frame (2) and/or of the module support (3) and supplies the measuring signals to the computing and control unit for controlling the drives is arranged on a module support (3).

2. A tracking rack system according to claim 1, **characterized in that**
the computing and control unit is coupled with further sensors for identifying environmental data.

3. A tracking rack system according to claim 1 or 2, **characterized in that**
at least two module support frames (2.1, 2.2), each mounted on two rack bases (1), are arranged next to each other and connected to each other rigidly to form a single unit, wherein only one module support frame (2.1) has a drive generating the pivoting movement and consisting of pivoting rod (5), linear slide bearing (9) and electrical cylinder (10).

4. A tracking rack system according to claim 3, **characterized in that**
one unit consists of three module support frames (2.1, 2.2, 2.3) connected to each other, one of which has a drive generating the pivoting movement and consisting of pivoting rod (5), linear slide bearing (9) and electrical cylinder (10).

5. A tracking rack system according to any one of claims 1 to 4, **characterized in that**
the bearings (11) of the module support rotation axes (12) on the module support frame (2) are dry-running plastic bearings.

6. A tracking rack system according to any one of claims 1 to 5, **characterized in that**
the joints (17) between the push rod sections (16.1 - 16.2, 16.2 - 16.3, etc.) are made of plastic with carbon fibres.

7. A method for controlling a tracking rack system according to claim 1, **characterized in that**
the movement of the electrical cylinders (10, 15) is controlled by means of a time function control; that the gravity sensor (18) measures the position of the module support frame and/or the module support and supplies the measuring signals to the computing and control unit for controlling the drives; and that,
when environmental influences are detected by means of sensors which result in upper limits of the load-bearing capacity of the rack being exceeded, the time function control is replaced by a control of the electrical cylinders (10, 15) to a predefined load-minimized position for the rack.

8. A method according to claim 7, **characterized in that**
the time function control continues to run internally in the phases of controlling and maintaining the load-minimized position, so that, when the load-minimizing position is deactivated, the position corresponding to time is controlled by supplying energy to the electrical cylinders (10, 15).

9. A method according to claim 7 or 8, **characterized in that**
the time function control is effected using an astronomical tracking algorithm.

## Revendications

1. Système de bâtis de poursuite du soleil pour modules solaires photovoltaïques, composé de cadres de support de modules (2) disposés pivotants entre deux bases de bâtis (1), dans lequel le cadre de support de module (2) est couplé à un entraînement disposé sur la base du bâti (1) pour effectuer des mouvements pivotants;
le cadre de support de module (2) présente des paliers (11) disposés écartés les uns des autres pour les axes de rotation (12) des supports de modules (3) étant perpendiculaires par rapport à l'axe de pivotement (7) du cadre de support de module (2), dans lequel les dimensions extérieures des supports des modules et les dimensions extérieures des modules sont conçues de sorte qu'ils puissent être pivotés à travers le plan crée par le cadre de support de module (2);
les axes de rotation (12) des supports de modules (3) disposent chacune d'un levier pivotant (13) qui est relié à une tige de poussée de réalisation scindée (16) par un joint articulé (17), dans lequel le joint articulé (17) relie les sections voisines des tiges de poussée ;
la tige de poussée (16) est déplaçable par un entraînement et les deux entraînements sont dépendants de la position du soleil ou contrôlés en fonction du temps ; la commande des entraînements s'effectue par une unité de calcul et de commande;
**caractérisé en ce que**
l'entraînement disposé sur la base du bâti (1) est composé d'un cylindre électrique (10) avec un palier lisse linéaire (9) disposée sur la base du bâti (1) et d'une tige pivotante (8) disposée entre le palier lisse linéaire (9) et le cadre de support de module (2) pour effectuer les mouvements de pivotement du cadre de support de module (2) ; l'entraînement pour la tige de poussée (16) comprend un cylindre électrique (15) qui est disposé sur le cadre de support de module (2) ; et
un capteur de gravité (18) qui mesure la position du cadre de support de module (2) et/ou du support de module (3) et transmet les signaux de mesure à l'unité de calcul et de commande pour commander les entraînements est disposé sur un support de module (3).

2. Système de bâtis de poursuite du soleil selon la revendication 1, **caractérisé en ce que**
l'unité de calcul et de commande est couplé à d'autres capteurs pour obtenir des données environnementales.

3. Système de bâtis de poursuite du soleil selon la revendication 1 ou 2, **caractérisé en ce que**
au moins deux cadres de support de modules (2.1, 2.2), chacun monté sur deux bases de bâtis (1), sont disposés l'un à côté de l'autre et reliés l'un à l'autre de manière rigide pour former une seule unité, dans lequel uniquement un cadre de support de module (2.1) dispose d'un entraînement générant le mouvement pivotant et constitué de la tige pivotante (5), du palier lisse linéaire (9) et du cylindre électrique (10).

4. Système de bâtis de poursuite du soleil selon la revendication 3, **caractérisé en ce que**
une unité est constituée de trois cadres de support de modules (2.1, 2.2, 2.3) reliés les uns aux autres, dont l'un dispose d'un entraînement générant le mouvement pivotant et constitué de la tige pivotante (5), du palier lisse linéaire (9) et du cylindre électrique (10).

5. Système de bâtis de poursuite selon l'une quelconque des revendications 1 to 4, **caractérisé en ce que**
les paliers (11) des axes de rotation (12) des supports de modules disposés sur le cadre de support de modules (2) sont des paliers en plastique fonctionnant à sec.

6. Système de bâtis de poursuite selon l'une quelconque des revendications 1 à 5, **caractérisé en ce que**
les joints articulés (17) entre les sections des tiges de poussée (16.1 - 16.2, 16.2 - 16.3, etc.) sont en plastique avec des fibres de carbone.

7. Procédé pour commander un système de bâtis de poursuite du soleil selon la revendication 1, **caractérisé en ce que**
le mouvement des cylindres électriques (10, 15) est commandé au moyen d'une commande en fonction du temps ; que le capteur de gravité (18) mesure la position du cadre de support de module et/ou du support de module et transmet des signaux de mesure à l'unité de calcul et de commande pour commander les entraînements ; et que,
en cas d'influences environnementales constatées au moyen de capteurs et conduisant au dépassement des plafonds de prise de charge du bâti, la commande en fonction du temps sera remplacée par une commande des cylindres électriques (10, 15) à une position prédéfinie de charge minimisée pour le bâti.

8. Procédé selon la revendication 7, **caractérisé en ce que**
la commande en fonction du temps continue de marcher à l'interne dans les phases de la commande et du maintien de la position de charge minimisée, de sorte que, lors de la désactivation de la position de charge minimisée, la position correspondant au temps soit commandée par alimentation en énergie des cylindres électriques (10, 15).

9. Procédé selon la revendication 7 ou 8, **caractérisé en ce que**
la commande en fonction du temps est effectuée en utilisant un algorithme astronomique de poursuite du soleil.
